# EUROPÄISCHE PATENTANMELDUNG

(11) **EP 1 780 572 A1**
(43) Veröffentlichungstag der Anmeldung: **02.05.2007**
(21) Anmeldenummer: 07001283.6
(22) Anmeldetag: 07.07.2004
(51) Int. Cl.: G02B 21/00

(54) **Anordnung zur Erfassung der Beleuchtungsstrahlung in einem Laser-Scanning-Mikroskop**

(30) Priorität: 11.07.2003 DE 10332064
(62) Teilanmeldung aus: 04015953.5
(71) Anmelder: CARL ZEISS JENA GmbH, 07745 Jena (DE)
(72) Erfinder: Wilhelm, Stefan, 07743 Jena (DE); Mehner, Thomas, 99510 Kleinromstedt (DE); Meisel, Ulrich, 07743 Jena (DE); Liedtke, Mirko, 07745 Jena (DE)

(57) **Zusammenfassung**

Anordnung zur Erfassung der Beleuchtungsstrahlung (MD1,MD2,MD3) in einem Laser Scanning Mikroskop,
wobei eine Auskopplung und Detektion eines Teils der Beleuchtungsstrahlung am Hauptfarbteiler (HFT) erfolgt, wobei vorteilhaft durch den Hauprfarbteiler (HFT) transmittiertes Licht detektiert wird,
und/ oder eine Auskopplung und Detektion eines Teils der Beleuchtungsstrahlung vor der Einkopplung in eine Lichtleitfaser (F1,F2) erfolgt
und/ oder
eine Auskopplung und Detektion eines Teils der Beleuchtungsstrahlung an einem einer Lichtleitfaser nachgeordneten Strahlteiler (ST2) erfolgt .

## Beschreibung

In DE 197 02 753 wird in einem Laser-Scanning-Mikroskop im Anregungsstrahlengang vor dem Hauptfarbteiler über eine zusätzliche Ausspiegelung ein Teil der Anregungsleistung auf eine Monitordiode gelenkt.

Die Ausspiegelung auf die Monitordiode kann somit auf eine solche Art im Strahlengang angeordnet sein, dass das Laserlicht p-polarisiert auf die Schicht trifft, während der Hauptfarbteiler s-polarisiert getroffen wird.

Das aus der Lichtleitfaser austretende Licht ist besser 100 : 1 linear polarisiert. Dies wird durch stressinduzierte Doppelbrechung erreicht. Entsprechend kann das lineare polarisierte Laserlicht in der Faser in zwei senkrecht zueinander stehenden Achsen geführt werden. Abgeleitet aus diesem Polarisationsgrad hat der elektrische Feldstärkevektor eine x-Komponente und eine y-Komponente (s und p-pol) mit einem Intensitätsverhältnis von 100 : 1. Um am Faserausgang diesen Polarisationsgrad zu erreichen, ist es notwendig das linear polarisierte Laserlicht parallel zu einer der doppelbrechenden Achsen der Faser einzukoppeln. Durch Umgebungseinflüsse kann die Orientierung der doppelbrechenden Achsen um Bruchteile von Winkelgraden zur Polarisationsrichtung des Lasers schwanken. Entsprechend schwankt der in die jeweiligen Achsen eingekoppelte Teil des Laserlichts. Bezogen auf die Polarisation am Faserausgang bedeutet das, dass das Intensitätsverhältnis zwischen x und y Komponente des elektrischen Feldstärkevektors schwankt.
Die zur Strahlumlenkung im Beleuchtungsstrahlengang des LSM eingesetzten dichroitischen Schichten reflektieren eine der beiden Komponenten des Feldstärkevektors (z.B. die x-Komponente) bevorzugt.
Ist die Monitordiode nun so angeordnet, dass, im Gegensatz zum Beleuchtungsstrahlengang die y-Komponente bevorzugt in den Pfad in dem die Monitordiode positioniert ist reflektiert wird, kommt es unterschiedlichen Intensitätsschwankungen in beiden Strahlengängen.

Durch das zusätzliche Element zur Ausspiegelung auf die Monitordiode kommt es weiterhin zu einem Verlust an Beleuchtungsenergie.

Aufgabe der Erfindung ist es, ein möglichst optimal zum Detektorsignal korreliertes Vergleichssignal für die Anregungsstrahlung zu gewinnen.

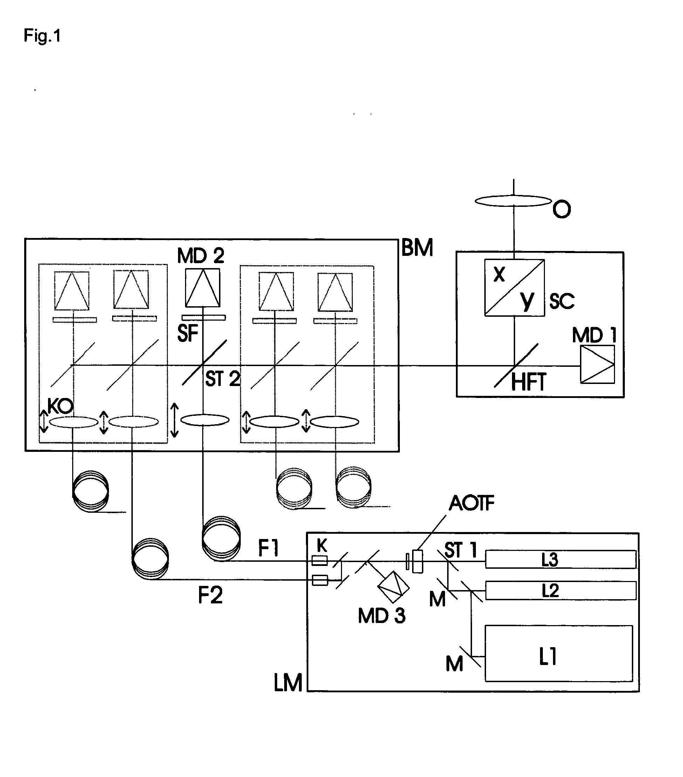

Die Aufgabe wird durch die Merkmale der unabhängigen Ansprüche gelöst. Bevorzugte Weiterbildungen sind Gegenstand der abhängigen Ansprüche .
Die Erfindung wird anhand einer schematischen Zeichnung in Fig.1 näher erläutert. Hierbei wird weiterhin auf die Beschreibung eines LSM Strahlenganges in DE 197 02 753 A1 Bezug genommen.

Ein Lasermodul LM enthält mehrere Laser L1-L3, die über Strahlteiler ST1 vereinigt werden und über einen AOTF und eine Kopplungsstelle K in eine Lichtleitfaser F1 eingekoppelt werden.
Alternativ kann über einen weiteren Strahlteiler auch eine Kopplung in einen weiteren Lichtleiter F2 erfolgen.
Im Beleuchtungsmodul BM sind verschiebliche Kollimationsoptiken KO vorgesehen, über diese und Strahlteiler ST2 gelangt das Laserlicht in Richtung des Hauptfarbteilers HFT des Mikroskopes und über einen X / Y Scanner SC und ein Objektiv O in Richtung der nicht dargestellten Probe. Auf die Darstellung des Detektionsstrahlenganges senkrecht zum Beleuchtungsstrahlengang wurde hier verzichtet.

Erfindungsgemäß erfolgt nun die Positionierung einer Monitordiode alternativ oder simultan in mehreren vorteilhaften Anordnungen:
A:
   In Beleuchtungsrichtung hinter dem Hauptfarbteiler HFT. Das durch HFT auf eine Monitordiode MD1 fallende Laserlicht entspricht dem Anteil der nicht durch den HFT reflektiert wurde. Der Vorteil ist, das kein zusätzliches optisches Element benötigt wird, um Laserlicht auf die Monitordiode MD1 zu lenken.
   Dadurch liegt sowohl im Strahlengang der Monitordiode als auch im Anregungsstrahlengang Licht mit identischer Polarisation vor. Weiterhin wird während der Messung als Hauptfarbteiler HFT wahlweise ein Neutralteiler 80 / 20 oder einem anderen Teilungsverhältnis verwendet der größer 50 % (Im Falle des 80 / 20 Teilers 80 %) der einfallenden Energie transmittiert, der damit auf den Hauptteiler gelangt.
   Durch den hohen Anteil transmittierter Leistung ist die transmittierte Leistung weitestgehend unabhängig von Änderungen der Transmission aufgrund von Temperatureffekten (einfacher Schichtaufbau). Des weiteren unterliegt auf diese Weise der auf die Monitordiode gelangenden Anteil der Beleuchtungsenergie den gleichen Schwankungen, wie das zur Probe reflektierte Laserlicht. Gemessen werden kann zu einer Zeit jeweils eine Wellenlänge.
B:
   Im Beleuchtungsmodul BM hinter den Strahlteilern ST2, dem jeweiligen Laser-Port zugeordnet, wie anhand der Monitordiode MD2 beispielhaft dargestellt.
   Dies hat den Vorteil, das eine Parallelmessung je einer Wellenlänge aus jedem
   Laser-Port durchgeführt werden kann. Über zusätzliche Sperrfilter SF wird sichergestellt, dass jede Monitordiode nur Licht aus dem ihr zugeordneten Laser-Port detektiert.
C:
   Auf dem Lasermodul LM, beispielsweise hinter dem AOTF und vor der Faserkopplung, vorteilhaft über Ausspiegelung an einer unbeschichteten Glasplatte GL auf eine Monitordiode MD3. Dadurch wird die Messung der Laserleistung vor der Faserkopplung möglich.

Folgende Messmodi sind für die verschiedenen Anordnungen vorteilhaft möglich:
I.
   Das Monitordiodensignal wird kontinuierlich ausgelesen (Vorgabe Elektronik). Das heißt es findet eine Mittelung über ein bestimmtes Zeitfenster statt. Da der AOTF in Abhängigkeit vom Scanregime (undirektional, bidirektional, ROI) unterschiedlich angesteuert wird (z.B. Ausschalten der Anregungsleistung bei Scanrücklauf), muss zur Messung des Monitordiodensignals ein Modus eingestellt werden, bei dem der AOTF konstant eingeschaltet ist. Dies stellt sicher, dass das an der Monitordiode gemessene Signal unabhängig vom Scanregime ist. Ein Messvorgang besteht somit aus folgenden Schritten:
   a) Anhalten des Scanvorgangs
   b) Neutralteiler 80 / 20 einfahren
   c) AOTF auf konstanten Modus schalten; nur die zu messende Laserlinie ist aktiviert
   Applikativer Nutzen:
   a)Wird eine Abweichung zu einem Sollwert / vorherigen Messwert festgestellt, kann über die Einstellung des AOTF die Anregungsleistung korrigiert werden. (Amplitude der akustischen Welle)
   b) In Verbindung mit der REUSE Funktion (Einstellen von Aufnahmeparametern eines abgespeicherten Bildes) der Software und einer Kalibrierung der Monitordiode kann die Laserleistung für jede im Experiment vorhandene Laserlinie exakt reproduzierbar eingestellt werden.
II.
   Denkbar ist auch das Monitordiodensignal Signal synchron zum Scanvorgang und zur Ansteuerung des AOTF auszulesen. Dann wird ein Auslesen während des Scanvorgangs möglich und eine dauernde Kontrolle der Anregungsleistung kann realisiert werden.
   Um bei einem Experiment mit mehreren Anregungslaserlinien in diesem Fall eine Messung von Einzellinien durchzuführen, kann vor der Monitordiode ein Filterrad mit Linienselektionsfiltern angeordnet werden. Dies ermöglicht das konstante Aufzeichnen der Intensität der einzelnen Linien für eine Wellenlänge oder einen Wellenlängenbereich.
   Auch eine spektrale Zerlegung der kollinear überlagerten Laserstrahlung mehrerer Laserlichtquellen im Strahlengang vor der Monitordiode und spektral selektive Detektion ist möglich.

Um eine möglichst kompakte konstruktive Lösung mit geringem Platzbedarf zu realisieren, erfolgt die Anpassung der Monitordiode an die Lichtleistung der jeweiligen Laserlinie durch Anpassung der Verstärkung (logarithmische Verstärkung / Dämpfung) der nachgeschalteten Elektronik.

Die erfindungsgemäßen Anordnungen können vorteilhaft verwendet werden für:
1. Stabilisierung / Aufzeichnung der Anregungsleistung bei Langzeitexperimenten
   (Anordnung A und B)
2. quantitative Messung der Anregungsleistung (Power-Meter-Funktion)
   (Anordnung A und B)
3. Fehlersuche im Service Fall (Kopplungseffizienz Lichtleitfaser)
   (Anordnung A,B und C)
4. automatische Faserjustage durch zwei Monitordioden
   (Anordnung A,B und C)

Ergänzende Erklärung zu den Punkten 3. und 4.:
In Verbindung mit der Monitordiode auf dem Lasermodul und Vergleich der beiden Monitordiodensignale (Lasermodul / Beleuchtungsmodul) kann unterschieden werden zwischen Schwankungen der Laserleistung (Langzeitmessung) und Dejustage / Defekt der Faserkopplung (Kurzeitmessung).
Über die Remote Fähigkeit des Systems ist auf diese Weise eine Ferndiagnose möglich und dementsprechend eine effiziente Fehlerbeseitigung Bei den Punkten 3 und 4 wird ausgenutzt, dass hinter den Lichtleitfasern Monitordioden vorliegen.
Das ermöglicht zum Beispiel die Überprüfung der Qualität der Fasereinkopplung und kann in Verbindung mit einer Motorisierung der Einstellelemente der
Faserkopplung zu einer automatischen Justage der Faserkopplung genutzt werden.

## Patentansprüche

1. Laser-Scanning-Mikroskop, mit mehreren Lasern unterschiedlicher Wellenlänge und diesen zugeordneten Lichtleitfasern zur Einkopplung des Laserlichts in das Mikroskop,
**dadurch gekennzeichnet, dass**
parallel für je eine Wellenlänge eine Auskopplung und Detektion eines Teils der Beleuchtungsstrahlung an Strahlteilern erfolgt, die den Lichtleitfasern nachgeordnet sind.

2. Anordnung nach Anspruch 1, wobei durch den Strahlteiler transmittiertes Licht detektiert wird.

3. Anordnung zur Erfassung der Beleuchtungsstrahlung in einem Laser Scanning Mikroskop,
wobei eine Auskopplung und Detektion eines Teils der Beleuchtungsstrahlung vor der Einkopplung in eine Lichtleitfaser erfolgt.

4. Anordnung nach Anspruch 3, wobei die Auskopplung hinter einem im Beleuchtungsstrahlengang angeordneten AOTF erfolgt.

5. Verfahren zum Betrieb eines Laser-Scanning-Mikroskopes nach einem der Ansprüche 1 - 5, wobei die Messung parallel für je eine Wellenlänge während des Scanvorgangs synchron zur zeilenweisen Erfassung der Probe erfolgt.

6. Verfahren zum Betrieb einer Anordnung nach einem der Ansprüche 1-5, wobei eine Messung mit mehreren Empfängern zur Diagnostizierung von Intensitätsschwankungen und / oder Dejustage erfolgt.
